# FASCICULE DE BREVET EUROPEEN

(11) **EP 0 505 268 B1**
(45) Date de publication et mention de la délivrance du brevet: **30.08.1995**
(21) Numéro de dépôt: 92400717.2
(22) Date de dépôt: 18.03.1992
(51) Int. Cl.: G01V 1/108, G01V 1/147

(54) **Générateur pyrotechnique de forces impulsionnelles sans onde de choc**
Pyrotechnischer Generator mit impulsiven Kräften ohne Stosswelle
Pyrotechnic impulse force generator without shock wave

(30) Priorité: 19.03.1991 FR 9103316
(43) Date de publication de la demande: 23.09.1992
(73) Titulaire: ELECTRICITE DE FRANCE Service National, 75008 Paris (FR)
(72) Inventeur: de Parny, Robert, F-13401 Marseille Cedex 09 (FR); Martin, André, F-83094 Toulon (FR); Luong, Minh Phong, F-91270 Vigneux sur Seine (FR)
(74) Mandataire: Signore, Robert

(56) Documents cités:
- DE-C- 705 346
- GB-A- 1 470 235
- US-A- 3 716 111
- US-A- 4 484 657
- US-A- 4 553 480

## Description

La présente invention se rapporte au domaine des appareils pyrotechniques capables d'engendrer des libérations brutales d'énergie destinées à créer des forces impulsionnelles. Ces forces, appliquées à des structures, permettent de les solliciter pour analyser leur spectre de réponse et prévoir par là même d'avance leur comportement en cas de choc violent ou de séisme.

L'invention trouve des applications particulièrement intéressantes dans le domaine de la sollicitation impulsionelle de pylônes métalliques, tels que les pylônes de lignes électriques ainsi que dans l'étude du comportement d'un immeuble ou d'une construction soumis à l'effet d'une onde de surface de type sismique se propageant dans le sol.

L'utilisation des dispositifs pyrotechniques connus à ce jour, pour les fins précédentes, connus sous le nom de boulons ou de manilles explosives, pose un certain nombre de problèmes. Ceux-ci sont liés d'une part à l'existence d'une onde de choc consécutive à l'explosion qui provoque leur fonctionnement avec notamment des risques de projection et, d'autre part, à leur capacité qui ne dépasse pas la production de forces de quelques tonnes (3 à 5 au maximum) si l'on ne veut pas créer de danger d' emploi sérieux en raison des risques de projection d'éclats de métal.

Le document US-A-4 553 480 divulgue un générateur pyrotechnique de forces impulsionnelles comprenant, dans un boîtier, un logement cylindrique pour le logement d'une poudre explosive, débouchant à une extrémité sur la surface externe du boîtier munie d'un percuteur et, à l'autre extrémité, dans une chambre d' expansion dont le fond est fermé par la surface d'une masse servant de projectile, montée de façon coulissante dans un alésage cylindrique du boîtier. Le temps de parcours de l'alésage cylindrique par le projectile, au bout duquel se produit une détente brutale des gaz de combustion de la poudre après l'allumage, confère au projectile une vitesse inférieure à la vitesse du son et permet son expulsion sous la forme d'un choc impulsionnel pur sans onde de choc.

La présente invention a précisément pour objet un générateur pyrotechnique de forces impulsionnelles qui permet de créer des impulsions pures de toute onde de choc avec une force éventuellement considérable et sans risque pour l'utilisateur.

Le générateur pyrotechnique de forces impulsionnelles selon l'invention se caractérise en ce que la masse est fixée par des moyens de retenue, tels que collerettes ou goupilles, cisaillables à partir d'un seuil de pression déterminée exercé par les gaz d'allumage de la poudre sur la surface de la masse servant de projectile, le volume de la poudre, la masse du projectile, le volume de la chambre et la longueur de l'alésage cylindrique étant choisis pour que le travail de cisaillement des moyens de retenue confère au projectile ladite vitesse et permette ladite expulsion.

Comme on peut le comprendre de ce qui précède, te choix que sait faire l'homme de métier des différents paramètres que sont la masse de la poudre, le volume de ta chambre d'expansion, le seuil de résistance mécanique des pièces à cisailler pour libérer la masse projectile, ainsi que la longueur de l'alésage cylindrique parcouru par le projectile, permet d'éviter la formation d'une onde de choc qui est en partie absorbée par le travail de cisaillement et inhibée par la détente brutale et rapide des gaz qui se produit dès que ta masse du projectile a quitté l'alésage de faible longueur. Cette détente rapide et instantanée des gaz de combustion de la poudre empêche ainsi qu'il y ait une véritable explosion. Il en résulte que le choc énergétique créé provoque une force impulsionnelle instantanée et pure de toute composante annexe.

Selon l'invention, le générateur pyrotechnique de force impulsionnelle peut être utilisé soit pour l'action directe du projectile que l'on envoie alors sur une structure à ébranler, soit, après amortissement de ce même projectile à l'aide d'une structure spéciale située dans le fond du boîtier, pour la force de réaction de sens opposé à la vitesse du projectile et que l'on peut facilement recueillir sur la face opposée du boîtier après l'allumage.

Une première application du générateur pyrotechnique à la sollicitation du pylône métallique correspond précisément à cette utilisation de la réaction au départ du projectile et se caractérise en ce que la partie du boîtier voisine du percuteur est fixée à un élément de la structure métallique, et en ce que l'extrémité opposée du boîtier se termine par un fond servant de logement à une zone d'amortissement de la masse servant de projectile, la force impulsionnelle appliquée au pylône étant la réaction du choc d'expulsion du projectile.

Dans ce mode de mise en oeuvre du générateur pyrotechnique, un autre avantage important apparaît, qui réside dans la possibilité de fixer le boîtier du générateur directement en contact avec une structure métallique du pylône, le plus souvent une cornière de celui-ci que l'on choisit à tout endroit souhaitable de la structure métallique pour le type d'investigation que l'on souhaite réaliser. La masse du projectile étant de l'ordre de 1 à quelques kilogrammes et la longueur du boîtier de 20 à 30 centimètres, le générateur est très facilement transportable et peut être fixé manuellement à l'endroit requis pour l'expérimentation. Le choc impulsionnel est ainsi appliqué directement sur le pylône métallique, fait entrer celui-ci en vibrations et c'est l'étude de la propagation et de l'intensité de celles-ci qui permet d'obtenir les résultats recherchés quant au comportement général de la structure.

Dans une deuxième application du générateur pyrotechnique, objet de l'invention, ce dernier est utilisé pour la force impulsionnelle que crée l'impact de la masse projectile sur une structure.

Cette application du générateur pyrotechnique à la génération dans le sol de deux ondes de volume successives et rapprochées pour simuler une onde sismique, se caractérise en ce que le générateur pyrotechnique est lié d'une part par le sommet du boîtier à un ancrage dans le sol, et, d'autre part, par le projectile et un écrou de mise sous tension réglable à une plaque métallique flexible fichée dans le sol, la force impulsionnelle appliquée à la plaque métallique lors de l'allumage de la poudre étant constituée de deux impulsions très rapprochées, dont la première correspond au détensionnement de la plaque lors du départ du projectile et la seconde à l'action directe de l'impact du projectile sur cette plaque. Dans cette application, on cherche essentiellement à reproduire artificiellement la simulation d'un séisme se propageant dans le sol. La plupart du temps, l'arrivée d'un tel séisme comporte deux ondes de compression très rapprochées et l'application précédente du générateur pyrotechnique permet précisément cette simulation avec des moyens très simples.

En effet, une plaque ou paroi métallique relativement épaisse, ayant été enfoncée en partie dans le sol est prétensionnée à l'aide d'un écrou de réglage qui se visse sur une tige filetée liée à la masse du projectile. L'effort nécessaire pour ce prétensionnement est absorbé par un ancrage situé à quelques mètres de distance et qui maintient le générateur sous tension à partir de la partie supérieure de son boîtier. Cette structure étant en place, lors de l'allumage de la poudre, il y a à la fois libération mécanique de la tension appliquée à la plaque dès que les moyens de retenue de la masse projectile cèdent au cisaillement, ce qui correspond à la première impulsion, puis instantanément départ du projectile qui, au bout du temps nécessaire pour parcourir la distance de 4 à 5 mètres le séparant de la plaque, percute celle-ci en produisant le choc impulsionnel correspondant à une deuxième onde de compression simulée. Un réglage correct des distances séparant le générateur de la plaque permet d'obtenir à volonté un écart temporel de 2 à 4 microsecondes entre les deux ondes de compression, réalisant ainsi une simulation parfaite d'une onde sismique dans le sol. Des structures de construction se situant au voisinage immédiat de la plaque entrent en vibration de la même façon qu'elles le feraient sous l'arrivée d'une onde sismique et l'on peut de cette façon étudier leur comportement.

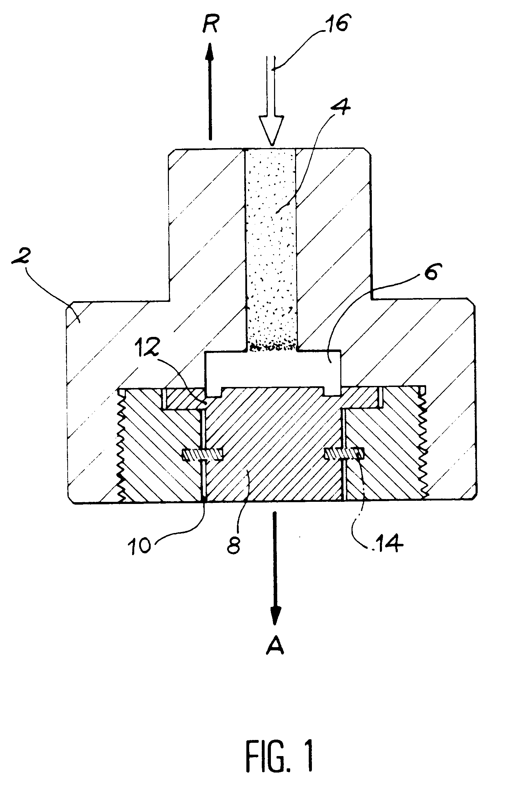

De toute façon, l'invention sera mieux comprise en se référant aux figures 1 à 5 ci-jointes qui montrent le générateur pyrotechnique et deux exemples d'application de ce générateur, description qui sera faite à titre surtout illustratif et non limitatif en se référant aux figures précédentes sur lesquelles :
- la figure 1 montre une vue schématique en coupe du principe du générateur pyrotechnique, objet de l'invention ;
- la figure 2 montre une vue générale de l'appareil destiné à l'application du générateur pyrotechnique à la sollicitation de pylônes électriques ;
- la figure 3 montre en détail un exemple possible des réalisation du percuteur destiné à l'allumage de la charge explosive ;
- la figure 4 montre en coupe selon A-A de la figure 2, le dispositif de rampe à baïonnettes permettant de solidariser les deux parties du boîtier ;
- la figure 5 montre un schéma de mise en oeuvre de l'application du générateur pyrotechnique à la simulation d'une onde sismique comportant deux ondes de volume rapprochées.

Sur la figure 1, le générateur comporte principalement un boîtier 2, un logement 4 pour la poudre explosive, une chambre d'expansion 6 pour les gaz de combustion de cette poudre après son allumage et la masse projectile 8 logée de façon coulissante dans un alésage 10 du boîtier 2. Cette masse projectile 8 est, conformément à l'invention, fixée à la masse du boîtier par des moyens de retenue temporaire dont on a représenté deux exemples possibles sur la figure 1, à savoir des collerettes 12 ou des goupilles 14. Il est bien entendu que dans chaque cas particulier, on utilise le plus souvent un seul de ces deux moysns qui ont été dessinés ici en combinaison pour simplifier les explications. Ces goupilles 14 et/ou ces collerettes 12 sont calculées de façon à avoir une certaine résistance au cisaillement et à retenir la masse du projectile 8 dans son alésage 10 après l'allumage de la poudre dans la chambre 4 jusqu'à ce que, sous l'influence de la pression croissante des gaz de combustion dans la chambre d'expansion 6, la force appliquée au sommet de la masse projectile 8 soit suffisante pour engendrer le travail nécessaire à la rupture des moyens de fixation 12 ou 14 provoquant ainsi la libération du projectile 8 qui est ejecté à la façon d'un obus. Dès que la masse projectile 8 s'échappe complètement de l'alésage 10 on assiste à une détente rapide des gaz de combustion sans onde de choc et cette détente suffit à souffler de ce fait la flamme de la combustion qui s'éteint. Comme la hauteur de l'alésage 10 est faible, (de l'ordre de quelques centimètres) cette détente intervient très vite après la rupture des moyens de retenue et c'est la combinaison de l'absorption d'énergie par le travail mécanique de cisaillement des moyens de retenue 12 et 14 et de cette détente instantanée intervenant rapidement après la rupture des moyens de retenue qui permet d'éviter de parvenir à un régime d'explosion et l'apparition d'une onde de choc.

Conformément à l'invention et comme on le verra par la suite du présent texte, le générateur pyrotechnique de la figure 1 peut s'utiliser de deux façons différentes selon que l'on met en oeuvre l'action directe de la masse du projectile 8, schématisée sur la figure par la flèche A, ou au contraire, la réaction à cette éjection du projectile 8 que l'on a représenté sur la face supérieure du générateur pyrotechnique par la flèche R de sens opposé. Les actions A et R sont les actions classiques bien connues en pyrotechnique qui correspondent pour l'une à l'envoi du projectile et pour l'autre au recul qui accompagne ce dernier dans toute arme à feu.

Sur la figure 1, le percuteur 16 qui permet l'allumage de la poudre dans le logement 4 est représenté d'une manière tout à fait schématique, mais il y a avantage à le réaliser selon certaines prescriptions particulières qui seront plus spécialement décrites à propos de la première application de ce générateur.

Enfin, il est clair que l'homme de métier saura calculer les paramètres que sont la quantité de poudre, le volume de la chambre d'expansion 6, la masse et les dimensions du projectile 8 et le seuil de rupture des moyens de retenue, pour parvenir à la création de forces impulsionnelles sans onde de choc correspondant aux caractéristiques recherchées.

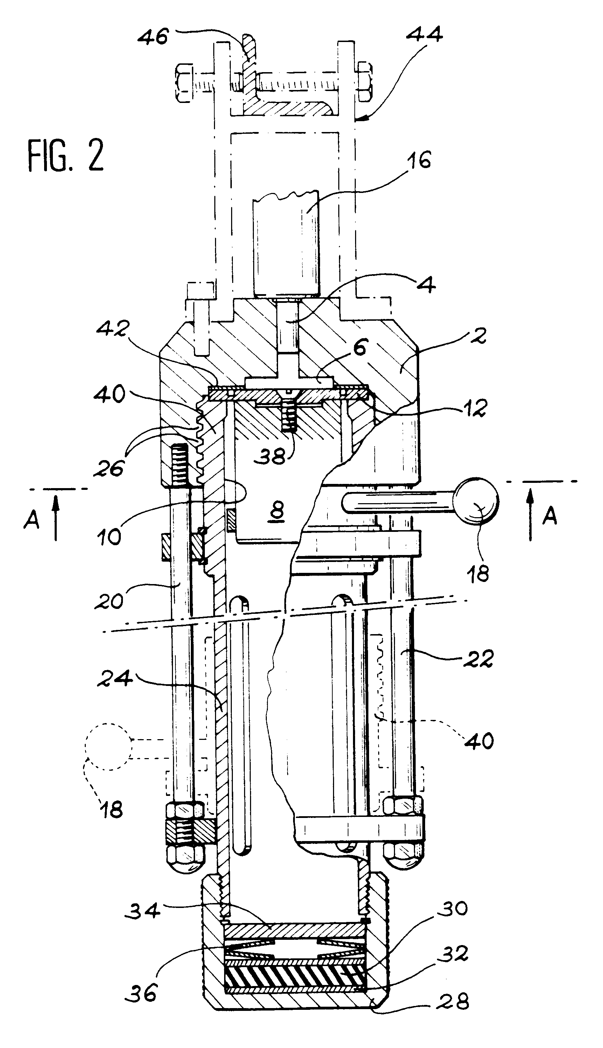

La figure 2 est relative à l'application du générateur pyrotechnique à la génération de chocs pour solliciter des structures métalliques élastiques, tels que des pylônes électriques et elle montre un mode de réalisation possible de ce générateur pour ce type d'application. D'une manière générale, les éléments communs au dispositif de la figure 1 et à celui de la figure 2, portent les mêmes nombre de référence et ne seront pas à nouveau décrits ici.

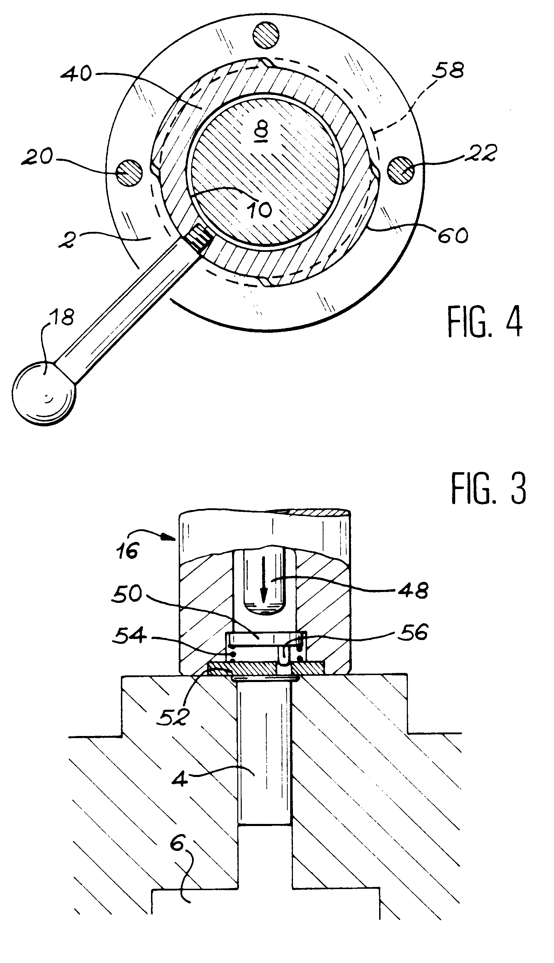

La figure 2 montre la constitution particulière du boîtier pour cette application. Ce boîtier comporte une culasse 16 liée à la pièce 2 qui constitue avec les montants 20 et 22 les parties fixes du boîtier. A l'intérieur de cette structure se trouve une autre structure 24 verrouillée sur la précédente par l'intermédiaire d'un système de rampe à baïonnettes 6 qui sera représenté plus en détail en coupe sur la figure 4 et que l'on peut manoeuvrer à l'aide de la poignée de verrouillage 18. Au fond 28 de cette structure 24, se trouve fixé le dispositif d'amortisseur de la masse 8, lequel comprend de façon classique connue un empilement de structures en plomb 32, en caoutchouc 30 et une rondelle d'acier 34, ainsi qu'une rondelle ressort 36. Ce dispositif est calculé pour que lorsque le projectile 8 vient s'y écraser, il soit capable d'aborber, par déformation, l'énergie cinétique résultant de ce projectile.

Dans le mode de réalisation représenté, le projectile 8 est fixé par une vis 38 à la rondelle de cisaillement 12, laquelle s'appuie sur sa partie périphérique externe sur un renforcement 40 à la structure interne 24. Une rondelle d'étanchéité 42 permet d'éviter la fuite des gaz hors de la chambre d'expansion 6 après l'allumage de la poudre.

Le percuteur 16 d'allumage de la poudre est de type électromagnétique et sera représenté plus en détail sur la figure 3.

Les structures supérieures du générateur d'impulsions comportent d'une façon générale les pièces 44 fixées au sommet du boîtier et par l'intermédiaire desquelles, le générateur est lui-même fixé à une cornière 46 du pylône métallique que l'on veut soumettre aux chocs impulsionnels créés par le générateur.

Sur la figure 3, on a représenté plus en détail, le percuteur 16 qui est, ici, de type électromagnétique. Il comporte un marteau 48 mis en mouvement par une bobine électrique non représentée. Entre le logement 4 de l'explosif et le marteau 48 se trouvent situées deux rondelles 50 et 52, maintenues écartées par un ressort 54 en l'absence de percussion du marteau 48 se trouvent situées deux rondelles 50 et 52, maintenues écartées par un ressort 54 en l'absence de percussion du marteau 48. La première rondelle 50, ou rondelle percutrice, comporte un ergot 56 destiné à percuter la poudre au travers d'un orifice prévu dans la rondelle de calibrage 52 qui permet le contrôle exact de la translation de l'ergot percuteur 56 et le déclenchement correct de l'allumage sans détérioration du logement 4 de la poudre.

Sur la figure 4, on retrouve la poignée de verrouillage 18 qui permet, par rotation, d'engager ou de désengager les rampes à baïonnettes 58 et 60 et de solidariser ou de désolidariser les deux structures 16 et 24 constitutives du boîtier 2 du générateur.

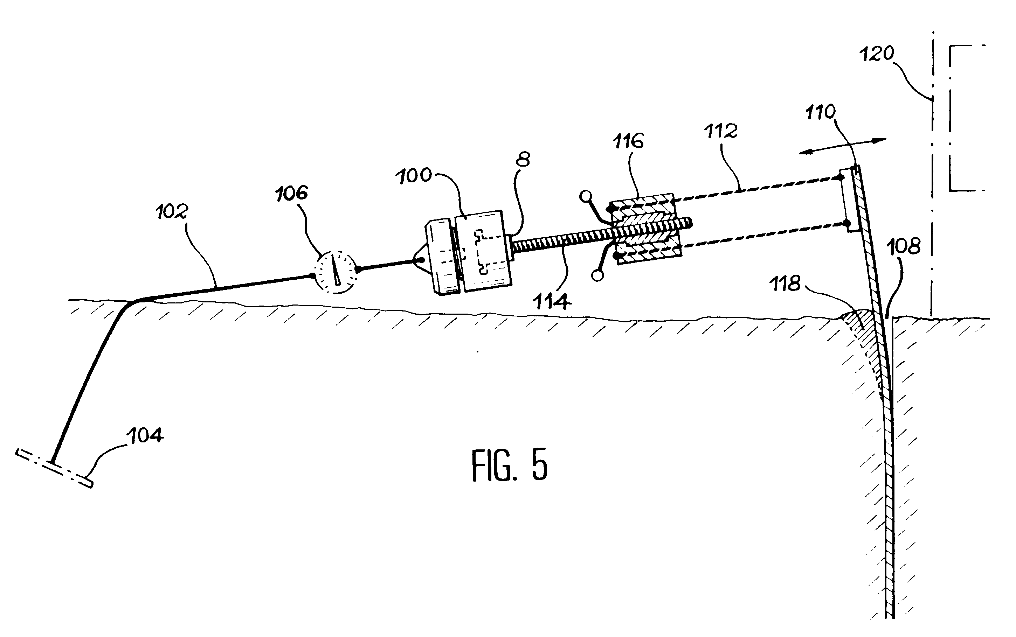

En se référant maintenant à la figure 5, on va décrire un mode possible d'application du générateur pyrotechnique à la simulation dans le sol d'une onde sismique composée de deux ondes de volume successives et rapprochées. Dans cet exemple, le générateur pyrotechnique 100 est monté de la façon suivante. Sur la partie du boîtier opposé à la masse mobile 8 se trouve une liaison mécanique 102 reliée à un dispositif d'ancrage 104 enterré dans le sol. Ce dispositif 102 peut comprendre un dispositif dynamométrique 106 permettant de connaître à chaque instant la tension du dispositif 102 qui est le plus souvent d'ailleurs un câble métallique.

Par ailleurs, au point 108 du sol où l'on veut engendrer l'onde sismique, se trouve largement enfoncée dans celui-ci une plaque métallique élastique large et épaisse 110. A l'aide de dispositifs appropriés et connus de l'homme de métier, cette plaque est attachée par des tirants 112 à une tige filetée 114 fixée sur le projectile mobile 8 du générateur pyrotechnique 100. Cette liaison intervient par l'intermédiaire d'un dispositif 116 qui est un écrou à vis sans fin permettant de créer une mise sous tension réglable de la plaque 110 sur l'extrémité de laquelle on tire en la faisant fléchir et en créant une compression de la partie 118 du sol située au pied de la plaque 110. Cette mise sous tension de la plaque 110 permet de mettre en réserve l'énergie élastique qui sera utilisée pour créér la première onde de compression de l'onde sismique dans le sol. La distance définie par les tirants 112 entre l'écrou 116 et la plaque 110 est de l'ordre de 4 à 5 mètres par exemple.

Le fonctionnement du système est le suivant. Lors de l'allumage de la poudre dans le générateur 100, le projectile 8 est soumis à la pression croissante des gaz dans la chambre d'expansion (référence 6, figures 1 et 2). Au moment où les moyens de retenue 12, 14, subissent le cisaillement prévu, la mise sous tension de la plaque 110 cesse instantanément, et elle vient retrouver sa position d'équilibre en provoquant une première onde de compression dans le sol. Ensuite, le projectile 8 continue sa trajectoire et vient frapper la partie hors du sol de la plaque 110 en créant par sa force impulsionnelle, la deuxième onde de volume dans sol dans la zone 108. Cette deuxième onde de compression est également une impulsion instantanée et pure de toute onde de choc. La distance temporelle entre les deux ondes de compression précédentes est donné par le temps de transit du projectile 8 entre son point de départ au niveau du générateur pyrotechnique 100 et son arrivée sur la plaque 110. C'est donc par le choix de la longueur des tirants 112 que l'on peut également régler avec une bonne précision cet écart de temps. Il est évident alors que pour un immeuble ou une construction 120 située à quelque distance de la zone 108, les deux ondes de volume engendrées seront assimilables à l'arrivée d'une onde sismique et l'étude du comportement de ce bâtiment 120 pourra alors être entreprise.

## Revendications

1. Générateur pyrotechnique de forces impulsionnelles sans onde de choc comprenant, dans un boîtier (2), un logement cylindrique (4) pour le logement d'une poudre explosive, débouchant à une extrémité sur la surface externe du boîtier munie d'un percuteur (16) et, à l'autre extrémité, dans une chambre d'expansion (6) dont le fond est fermé par la surface d'une masse (8) servant de projectile, montée de façon coulissante dans un alésage cylindrique (10) du boîtier, le temps de parcours de l'alésage cylindrique par le projectile (8), au bout duquel se produit une détente brutale des gaz de combustion de la poudre après l'allumage, conférant au projectile une vitesse inférieure à la vitesse du son et permettant son expulsion sous la forme d'un choc impulsionnel pur sans onde de choc, caractérisé en ce que la masse (8) est fixée par des moyens de retenue, tels que collerettes ou goupilles (12,14), cisaillables à partir d'un seuil de pression déterminée exercé par les gaz d'allumage de la poudre sur la surface de la masse (8) servant de projectile, le volume de la poudre, la masse du projectile, le volume de la chambre (6) et la longueur de l'alésage cylindrique (10) étant choisis pour que le travail de cisaillement des moyens de retenue confère au projectile ladite vitesse et permette ladite expulsion.

2. Application du générateur pyrotechnique selon la revendication 1 à 1a sollicitation de pylônes métalliques (46), caractérisée en ce que la partie du boîtier voisine du percuteur est fixée à un élément (46) de la structure métallique, et en ce que l'extrémité opposée du boîtier se termine par un fond (28) servant de logement à une zone d'amortissement de la masse servant de projectile, la force impulsionnelle appliquée au pylône étant la réaction du choc d'expulsion du projectile.

3. Application du générateur pyrotechnique selon la revendication 1 à la génération dans le sol de deux ondes de compression successives et rapprochées pour simuler une onde sismique, caractérisée en ce que le générateur pyrotechnique est lié d'une part par le sommet du boîtier à un ancrage (104) dans le sol, et, d'autre part, par le projectile (8) et un écrou (116) de mise sous tension réglable à une plaque métallique flexible (110) fixée dans le sol, la force impulsionnelle appliquée à la plaque métallique lors de l'allumage de la poudre étant constituée de deux impulsions très rapprochées, dont la première correspond au détensionnement de la plaque (110) lors du départ du projectile et la seconde à l'action directe de l'impact du projectile (8) sur cette plaque (110).

## Claims

1. A pyrotechnic generator of propulsive forces without a shock wave, comprising, in a casing (2), a cylindrical housing (4) intended for housing an explosive powder and opening out at one end in the outer surface of the casing, this surface being provided with a striking pin (16), and opening out at the other end into an expansion chamber (6) whereof the base is closed by the surface of a mass (8) serving as a projectile, slidably mounted in a cylindrical bore (10) in the casing, the time during which the projectile (8) passes through the cylindrical bore, at the end of which the combustion gases of the powder are violently expanded after ignition, imparting to the projectile a speed less than the speed of sound and enabling it to be expelled in the form of a pure propulsive shock without a shock wave, characterized in that the mass (8) is fixed by retaining means, such as flanges or pins (12, 14), which can be sheared from a predetermined pressure threshold exerted by the ignition gases of the powder on the surface of the mass (8) serving as a projectile, the volume of the powder, the mass of the projectile, the volume of the chamber (6) and the length of the cylindrical bore (10) being selected such that the work of shearing the retaining means imparts to the projectile the said speed and enables the said expulsion to take place.

2. An application of the pyrotechnic generator according to Claim 1 to stressing metal pylons (46), characterized in that the part of the casing close to the striking pin is fixed to an element (46) of the metal structure, and in that the opposite end of the casing ends in a base (28) serving as a housing for a zone for cushioning the mass serving as the projectile, the propulsive force applied to the pylon being the reaction of the expulsion shock of the pylon.

3. An application of the pyrotechnic generator according to Claim 1 to generating two successive and close compression waves in the ground for simulating a seismic wave, characterized in that the pyrotechnic generator is connected on the one hand by the top of the casing to an anchoring means (104) in the ground and on the other hand by the projectile (8) and an adjustable tensioning nut (116) to a flexible metal plate (110) which is fixed in the ground, the propulsive force applied to the metal plate when the powder is ignited being formed from two very close impulses, whereof the first corresponds to the relief of the plate (110) when the projectile starts off and the second corresponds to the direct action of the impact of the projectile (8) against this plate (110).

## Patentansprüche

1. Pyrotechnischer Impulskraftgenerator ohne Schockwelle umfassend, in einem Gehäuse (2), eine zylindrische Aufnahme (4) zur Aufnahme eines Explosionspulvers, die an einem Ende auf der äußeren Oberfläche des mit einem Schlagbolzen (16) versehenen Gehäuses und am anderen Ende in eine Expansionskammer (6) mündet, deren Boden durch die Oberfläche einer als Projektil dienenden Masse (8) verschlossen ist, welches in geführter Weise in einer zylindrischen Bohrung (10) des Gehäuses angebracht ist, wobei die Zylinderbohrungsdurchlaufzeit des Projektils (8), an dessem Ende von dem Pulver nach der Zündung eine gewaltige Verbrennungsgasexpansion erzeugt wird, dem Projektil eine unter der Schallgeschwindigkeit liegende Geschwindigkeit verleiht und seinen Ausstoß in Form eines reinen Impulsstoßes ohne Schockwelle gestattet,
**dadurch gekennzeichnet,**
daß die Masse (8) durch eine Rückhalteeinrichtung fixiert ist, so daß Bunde oder Stifte (12, 14), die ab einer bestimmten Schwelle des Drucks, welcher durch das Zündgas des Pulvers auf die Oberfläche der als Projektil dienenden Masse (8) ausgeübt wird, durchtrennbar sind, wobei das Pulvervolumen, die Projektilmasse, das Kammervolumen (6) und die Länge der zylindrischen Bohrung (10) so gewählt sind, daß die Durchtrennungsarbeit der Rückhalteeinrichtung dem Projektil die besagte Geschwindigkeit verleiht und den besagten Ausstoß ermöglicht.

2. Verwendung des pyrotechnischen Generators nach Anspruch 1 zur Belastung von Metallmasten (46),
**dadurch gekennzeichnet,**
daß der dem Schlagbolzen benachbarte Teil des Gehäuses an einem Element (46) der metallischen Struktur fixiert ist und dadurch, daß das gegenüberliegende Ende des Gehäuses durch einen Boden (28) begrenzt wird, der zur Aufnahme der als Projektil dienenden Masse in einer Dämpfungszone dient, wobei die auf den Masten ausgeübte Impulskraft die Stoßreaktion des Projektilausstoßes ist.

3. Verwendung des pyrotechnischen Generators gemäß Anspruch 1 zur Erzeugung von zwei aufeinanderfolgenden und nahen Schockwellen im Boden zur Simulierung einer seismischen Welle,
**dadurch gekennzeichnet,**
daß der pyrotechnische Generator einerseits über die Spitze des Gehäuses mit einer Verankerung (104) im Boden und andererseits über das Projektil (8) und eine einstellbare Vorspannungsschraube (116) mit einer flexiblen, im Boden fixierten Metallplatte 110 verbunden ist, wobei die auf die Metallplatte durch Zündung des Pulvers aufgebrachte Impulskraft aus zwei sehr nahen Impulsen zusammengesetzt ist, deren ersterer der Entspannung der Platte (110) durch den Projektilstart und deren zweiter der direkten Stoßwirkung des Projektils (8) auf diese Platte (110) entspricht.
